(19) Europäisches Patentamt / European Patent Office / Office européen des brevets

(11) **EP 3 619 694 B1**

(12) **EUROPEAN PATENT SPECIFICATION**

(45) Date of publication and mention
of the grant of the patent:
**28.04.2021   Bulletin 2021/17**

(21) Application number: **18725656.5**

(22) Date of filing: **30.04.2018**

(51) Int Cl.:
*G08B 13/12* (2006.01)      *G08B 13/187* (2006.01)
*B60P 3/22* (2006.01)       *G09F 3/03* (2006.01)
*G06K 19/077* (2006.01)      *B65D 27/30* (2006.01)

(86) International application number:
**PCT/IB2018/052982**

(87) International publication number:
**WO 2018/203212 (08.11.2018 Gazette 2018/45)**

(54) **ANTI-TAMPERING SEALING SYSTEM**

EINBRUCHSICHERES VERSIEGELUNGSSYSTEM

SYSTÈME D'ÉTANCHÉITÉ ANTI-MANIPULATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **02.05.2017   IT 201700047094**

(43) Date of publication of application:
**11.03.2020   Bulletin 2020/11**

(73) Proprietor: **Leonardo Sistemi Integrati Srl
16152 Genova (IT)**

(72) Inventor: **FRATTONI, Alessandro
16038 Santa Margherita Ligure (GE) (IT)**

(74) Representative: **Bottino, Giovanni
ARBO Srl
Via Colombo, 11/29
16121 Genova (IT)**

(56) References cited:
**EP-A1- 2 590 154        EP-A1- 2 743 864
WO-A2-2006/101852    US-A1- 2012 235 815**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a security sealing system for controlling lock devices in openings, compartments or the like.

The system comprises a control unit, a transmission line and at least one control device.

The control unit is connected to the control device through the transmission line, such that the control unit will generate an interrogation signal for the control device, which interrogation signal is transmitted through the transmission line for assessing the integrity of the transmission line.

It will be clearly appreciated from the features of the inventive system as described hereinafter that the latter may be easily used whenever an opening, a compartment or a closed space must be monitored for break-in attempts.

In general, the system is designed for places or instruments that require monitored access control and preservation of lock device integrity.

The invention particularly relates to lock devices that are used in combination with fuel tank trucks.

These lock devices are used to prevent unauthorized access to fuel drain devices.

For example, both drain connectors and oil tapping devices must be properly secured by lock devices.

Unauthorized draining, i.e. draining of oil without its owner's knowledge, is becoming increasingly frequent, and the oil so obtained is sold in illegal oil trade systems.

Although unauthorized oil draining affects a small amount of the tank contents, since oil is transported by organized fleets comprising a large number of trucks, such drained amount is still a considerable loss for oil transportation companies.

Therefore, such companies have introduced oil-level sensors in the tanks, with an alarm system being generally provided to warn about unexpected level decrease.

In addition to or instead of this arrangement, sensors and safety devices are provided on the drain connectors of the tanks, for the latter to be only opened by authorized personnel.

Nevertheless, these prior art arrangements are not able to solve the aforementioned problem, as their safety devices can be easily circumvented and their technologies allow tampering, thereby causing huge financial losses.

EP 2743864 A1 and WO 2006/101852 A1 each disclose a secure sealing device comprising an RFID tag connected to a closure element, which is conductive and thread-like so that it can be wrapped around a closure device such as a lock. In order to open the closure device, tampering of the closure element takes place, which results in a modification of the response signal from the tag. Communication between tag and interrogator takes place wirelessly.

Therefore, there is a need, yet unfulfilled in prior art devices, for a security sealing system that is particularly efficient and cost-effective and can obviate the aforementioned drawbacks.

The present invention fulfills the above purposes by providing a system as described in claim 1.

The operation of RFID tags is known, with a control unit generating an interrogation signal that is transmitted to the RFID tag, and expecting a predetermined response therefrom.

It will be readily appreciated that the inventive system configuration is highly cost-effective, due to the use of low-cost components.

Furthermore, the peculiar design of the second transmission section allows the latter to fit the various shapes of existing lock devices, without requiring any change thereto.

The flexible thread-like element may encircle the lock device to be secured and any change in the expected response to the interrogation signal would afford immediate identification of an attempted change to the thread-like element, which would reveal attempted opening or tampering of the relevant lock device.

Namely, the system of the present invention has a transmission line divided into two physically distinct lines, which are designed to serve different functions.

Thus, a first transmission section is adapted to connect the various connecting devices which have the RFID tags connected thereto by the second transmission section. As more clearly explained hereinbelow, the first section of the transmission line is designed to distribute the signal among the various connecting devices, and the second section of the transmission line is used to encircle the lock device to be monitored.

Particularly referring to tankers or tank trucks, the system of the present invention may be thus used to seal any access, such as accesses to instruments, meters or other similar devices.

The thread-like element is advantageously made of a conductive metal material.

The thread-like element cannot be manipulated, which prevents circumvention or tamper thereof without altering the operating principle of the system.

Furthermore, as more clearly explained in a few exemplary embodiments, on the one hand the second transmission section is engaged in the RFID device, and cannot be removed without tampering the RFID device, and on the other it involves different types of connections.

Firstly, it involves a mechanical connection which tensions the thread-like element, to prevent the sealed lock devices from being even partially opened.

Secondly, it also involves an electrical connection, as it is coupled to the control unit via the connecting device.

It shall be noted that the outside diameter of the thread-like element is preferably about 1 millimeter, and can thus replace the steel strings that are typically used even in small locks.

In one improvement, the system of the present invention affords break-in attempt assessment for a plurality of lock devices. The control unit is designed to be connected to the connecting device through the first transmission section, the connecting device being connected to at least two identification devices via two corresponding second transmission sections.

In one improvement, a plurality of connecting devices are provided.

The connecting devices are connected together by the first transmission section.

This will provide a cable system for distribution of the radio-frequency interrogation signal instead of a radio system.

This configuration has indisputable advantages.

The first advantage is the possibility of providing a flexible thread-like element that is not easily eluded with a bypass.

Also, a single control unit can be used for a plurality of RFID control devices.

This is particularly important in the tank truck application of the system.

Tank trucks have sizes that exceed RFID communication standards, and especially have different metal parts that disturb communication.

In view of obviating this problems, prior art systems use a number of control units, or high-intensity interrogation signals.

Both arrangements are ineffective: the former has a high cost, and the latter is not appropriate due to the presence of explosive material, i.e. the oil that is transported.

The provision of connecting devices obviates these problems and provides a system for distributing the interrogation signal.

Due to the above described features, the system of the present invention is particularly safe because, considering the operation of RFIDs, the control unit can read some tens of RFID in about 1 second; this time period may be the minimum cycle time allowed for any tamper attempt.

In a preferred embodiment, in view of affording radio communication between the RFID devices and the control unit, the second transmission section has at least one wire lead, whereas the connecting device has conductive tracks connected to the first transmission section, for the interrogation signal to be wirelessly transmitted to the second transmission section.

A kind of antenna is thus formed between the second transmission section and the conductive track of the connecting device.

The advantages of this configuration, will be more clearly appreciated in combination with the special construction advantages of the invention system, as described hereinbelow.

Particularly, according to the invention, the first transmission section is composed of a coaxial cable.

Furthermore, the interrogation signal consists of a radio-frequency signal having a frequency ranging from 860 MHz to 960 MHz.

Particularly, the frequency range falls in the ISO/IEC 18000-6 RFID standard.

The choice of the ISO/IEC 18000-6 RFID standard provides the best balance between the size of RFID devices, the uniqueness of RFID tags that are conveniently serialized by the manufacturer, the possibility of forming transmission lines that can be easily coupled and appropriately sized, also in response to the purposes and construction requirements of the inventive system.

In one improvement, the second transmission section has a flexible thread-like element whose length depends on the construction parameters of the system and on the types of flexible element and RFID device.

Namely, the length of the thread-like element is given by the sum of a constant value and a value that depends on the wavelength of the first transmission section, i.e the coaxial cable.

The length of the thread-like element will be thus calculated as follows:

$$Ladatt + m * Llambda/2$$

where:
m is an integer value, Ladatt is the constant value and Llambda is the wavelength of the coaxial cable.

Concerning the ISO/IEC 18000-6 standard, for a given type of RFID and for a given type of cable, 120 mm may be taken as the constant value and 23 cm as the wavelength.

The combination of these features will provide transmission lines that can best match the input impedance of the RFID device to the impedance of the control unit.

Such matching is particularly obtained using a thread-like element as long as 120 millimeters, such that the imaginary component of the impedance of the RFID device is canceled at the operating frequency of the system.

Complex conjugate matching would be theoretically required, with an identical real part and an imaginary part of opposite sign: unfortunately such matching cannot be obtained using a simple RF cable, and hence the selected matching would simple reverse the imaginary component, while preserving construction simplicity and providing direct connection of the first transmission section to the RFID device without further circuits with complex matching-specific parameters.

Due to such impedance matching and the very small size of the coaxial cable the thread-like elements connected to the RFID devices cannot be easily tampered by simply cutting and reconnecting the cable.

Furthermore, the choice of the ISO/IEC 18000-6 standard will provide inexpensive transition to a 75 Ohm transmission line, instead of the 50 Ohm as used in prior art systems, which will afford a number of advantageous aspects.

The first advantage is a cost benefit, as the coaxial distribution cable of the connecting devices may be formed using a commercially available coaxial cable designed for television use, which is widely used and has a low cost, and further allows the use of F-type connectors which have a low cost and can be inexpensively installed: this will minimize the installation costs for RF signal distribution.

Secondly, a technical advantage is also obtained, as 75 Ohm coupling lines afford better coupling with the second transmission section, as the higher the impedance the higher the voltage with the same length of the sensing element of the second transmission section and the same distance thereof from the transmission line.

In a preferred embodiment, the control device has an integrally formed external casing.

Thus, the RFID device is embedded in a resin, such that any tampering attempt thereon would be immediately identified.

Finally, in a further embodiment, the control unit comprises location-based and/or time recording means.

This configuration provides obvious advantages, in that the security system so obtained will both readily identify any tamper, and add time and location marks to tamper attempts.

This arrangement is particularly advantageous in special configurations of the inventive system, that will be described hereinafter with reference to a few exemplary embodiments.

These and other features and advantages of the present invention will appear more clearly from the following description of a few embodiments, illustrated in the annexed drawings, in which:

Fig. 1 shows a possible embodiment of the system of the present invention;
Fig. 2 shows a detail of the system of the present invention;
Fig. 3 shows a further embodiment of the system of the present invention.

It shall be noted that the embodiments provided in this patent application are given for the purpose of a better understanding of the advantages and features of the inventive system.

Therefore, these embodiments shall be simply intended to illustrate without limitation the inventive concept of the present invention, which consists in providing a system that affords highly efficient assessment of break-in attempts on a lock device.

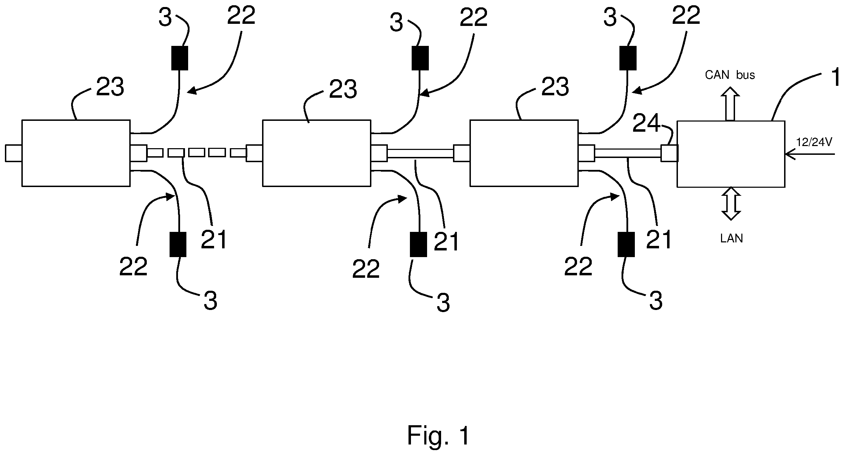

Particularly referring to Figure 1, the security sealing system of the present invention comprises a control unit 1, a transmission line for and a plurality of control devices 3.

The control unit 1 is connected to the various control devices 3 via the transmission line and will generate an interrogation signal for the control devices 3, that is transmitted through the transmission line for assessing its integrity.

Particularly, the transmission line is composed of a first transmission section 21 and a second transmission section 22 which are connected via a connecting device 23.

The second transmission section 22 consists of a flexible thread-like element which is adapted to at least partially encircle the lock device.

The control devices 3 are in turn embodied by RFID devices, the interrogation signal consisting of a radio-frequency signal.

The variant embodiment of the system as shown in Figure 1 provides a particular configuration in which the control unit 1 is connected via the first transmission section 21 to a first connecting device 23, which is connected to a second connecting device 23 via the first transmission section 21, and so forth.

Each connecting device 23 is connected to two RFID devices 3 via two corresponding second transmission sections 22.

Any number of RFID devices 3 and any number of connecting devices 23 may be obviously provided, still with the same configuration as shown in Figure 1.

The first transmission section 21 consists of a coaxial cable 21 which is connected at its ends to the connecting devices 23 and/or to the control unit 1, preferably via F-type connectors 24, known in the television field. On the other hand, the second transmission section 22 preferably consists of a flexible wire lead 22, which is connected at its ends to the RFID devices 3 and the connecting device 23 respectively.

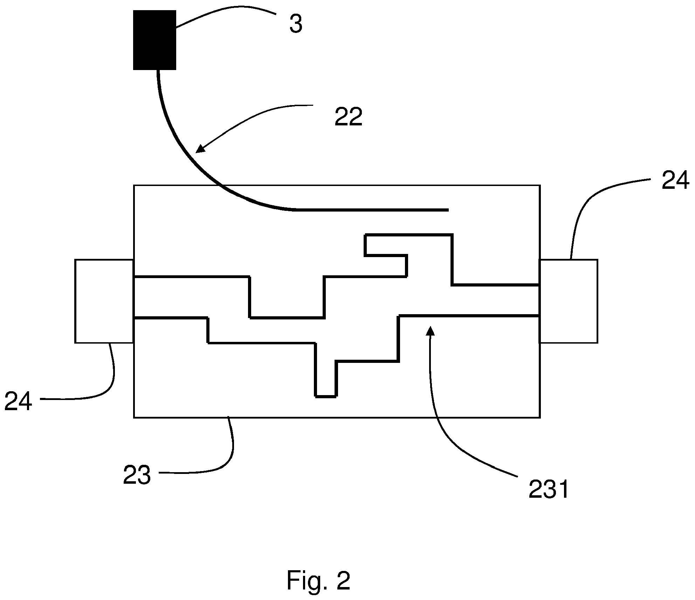

Particularly, Figure 2 shows the peculiar coupling arrangement between the connecting device 23 and the second transmission section 22.

Figure 2 shows an exemplified principle view of the connecting device 23, which preferably consists of an electronic card, having conductive tracks 231.

The conductive tracks 231 transmit the interrogation signal generated by the control unit 1, which is connected to the connecting device 23 via the coaxial cable 21 and the connectors 24.

The end portion of the wire 22 acts as an antenna with the conductive track 231 for wireless coupling of the conductive track 231 and the wire 22.

Particularly referring to figures 1 and 2, the interrogation signal generated by the control unit 1 is transmitted through all the connecting devices 23 and reaches all the RFID devices 3.

Due to the flexibility of the wire 22, any lock device may be at least partially covered, as described above.

It will be appreciated that the configuration of the system of Figure 1 can monitor six different lock devices, with six RFID devices being provided.

The control unit 1 sends a RFID interrogation, i.e. a code, to the RFID devices 3 through the coaxial cable 21.

The RFID devices respond to the interrogation, the control unit 1 receives this response and checks if it has received the expected code.

Upon startup of the system, the control unit 1 is configured to interrogate the expected codes; the control unit 1 reads all the installed branches (consisting of the RFID devices 3 and the wires 22) and holds the record of the expected configuration.

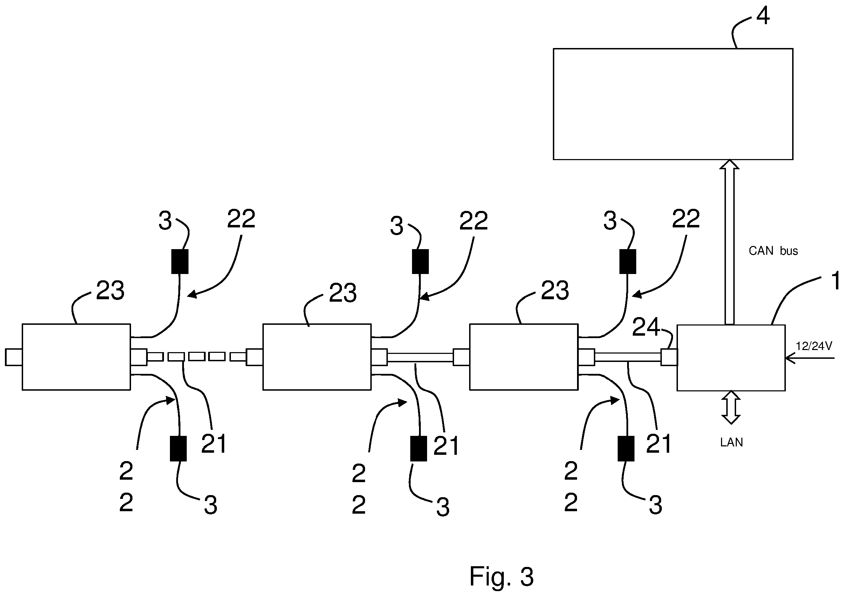

If not all the branches of the recorded configuration are detected, then the control unit 1 emits an alarm signal, which may be transmitted, as later shown in Figure 3, to a remote controller.

In one embodiment, the dimensions of the control device 3 are 50 mm x 30 mm x 20 mm, the dimensions of the control unit are 120 mm x 80 mm x 50 mm, and the length of the wire lead 22 is calculated with the above formula.

The interrogation signal has a frequency ranging from 860 MHz to 960 MHz.

As mentioned above, each RFID device 3 may have an outer casing made of a material that is resistant to the chemicals expected to be used in the system installation context.

Likewise, the coaxial cable 21 and the wire 22 may be also coated with a chemical-resistant material, such as fluorinated ethylene propylene.

As mentioned above, the control unit 1 may be designed to comprise location-based and/or time recording means.

Thus, if the central unit records an alarm signal indicating an attempt to tamper the system, a time and location mark may be added to the event.

The event may be stored in a special storage unit in the control unit 1 and/or be transmitted to a remote controller.

In the variant embodiment as shown in Figure 1, the control unit receives a power signal and has means for connection to a remote controller.

In a possible embodiment, the control unit 1 may be supplied with power by a power generating and accumulating source, such as a battery.

The battery may be either integrated in the control unit 1 or external to it, i.e. connected to the central unit 1, in any manner known in the art.

Furthermore, the battery may be of rechargeable type.

The battery may be provided instead of or in addition to the external power source: in the case of a rechargeable battery, circuits may be integrated in the control unit, in the battery or external to them, for charging the battery through the external power signal.

Also, the control unit 1 has LAN and CAN-BUS communication means for communication with a local network and/or a remote controller.

Figure 3 shows a possible embodiment in which the system of the present invention is connected to a remote controller 4 via the CAN-BUS.

Two operating modes may be advantageously provided:

- Affiliation: the control unit 1 uses the LAN port to record the configuration of the installed branches (wire 22 and RFID device 3);
- Alert: the control unit 1 uses the CAN port to cyclically send messages to the remote controller 4.

The messages concern the system state and may be messages either confirming proper operation or alarm messages, if the system identifies abnormal operation or does not receive the expected response from one of the RFID devices 3.

If no message is sent, an alarm state may be inferred.

In a possible embodiment, messages may be also replicated on the LAN port.

Considering the above discussed features and the simplicity of components, the system of the present invention may be found to be easily adapted to the various types of existing control systems installed in the environment in which the system of the present invention is to be used.

The hardware and software components in the control unit 1 allow the latter to communicate with any remote controller 4, even a controller of a preinstalled system.

**Claims**

1.    A security sealing system for controlling closure devices of openings or compartments or the like, comprising a control unit (1), a transmission line and at least one control device (3),
    said control unit (1) being connected to said at least one control device (3) via said transmission line,
    said control unit (1) generating an interrogation signal for said control device (3), which interrogation signal is transmitted through said transmission line for assessing the integrity of said transmission line,
    said transmission line being composed of a first transmission section (21) and a second transmission section (22), which are connected via a connecting device (23), which second transmission section (22) is composed of a flexible thread-like element (22) adapted to at least partially encircle said closure device,
    said control device (3) consisting of a RFID device, and said interrogation signal consisting of a radio-frequency signal,
    **characterized in that**
    said first transmission section (21) consists of a coaxial cable, which coaxial cable is directly connected to said control unit (1).

**2.** A system as claimed in claim 1, wherein said control unit (1) is connected to said connecting device (23) via said first transmission section (21),

Said connecting device (23) being connected to at least two RFID devices (3) via two corresponding second transmission sections (22).

**3.** A system as claimed in one or more of the preceding claims, wherein a plurality of connecting devices (3) are provided.

**4.** A system as claimed in one or more of the preceding claims, wherein said second transmission section (22) has at least one wire lead,

said connecting device (23) having conductive tracks (231) connected to said first transmission section (21), such that the interrogation signal is wirelessly transmitted to said second transmission section (22).

**5.** A system as claimed in one or more of the preceding claims, wherein said interrogation signal consists of a radio-frequency signal having a frequency ranging from 860 MHz to 960 MHz.

**6.** A system as claimed in one or more of the preceding claims, wherein said second transmission section (22) has a flexible thread-like element whose length is equal to the sum of a constant value and a waveform-dependent value.

**7.** A system as claimed in one or more of the preceding claims, wherein said control device (3) has an integrally formed external casing.

**8.** A system as claimed in one or more of the preceding claims, wherein said control unit (1) comprises location-based and/or time recording means.

**Patentansprüche**

**1.** Sicherheitsverschlusssystem zur Steuerung von Verschlussvorrichtungen von Öffnungen oder Innenräumen oder dergleichen, umfassend eine Steuereinheit (1), eine Übertragungsleitung und mindestens eine Steuervorrichtung (3),

wobei die Steuereinheit (1) über die Übertragungsleitung mit der mindestens einen Steuervorrichtung (3) verbunden ist,

die Steuereinheit (1) ein Abfragesignal für die Steuervorrichtung (3) erzeugt, wobei das Abfragesignal durch die Übertragungsleitung übertragen wird, um die Integrität der Übertragungsleitung zu beurteilen,

wobei die Übertragungsleitung aus einem ersten Übertragungsabschnitt (21) und einem zweiten Übertragungsabschnitt (22) besteht, die über eine Verbindungsvorrichtung (23) verbunden sind, wobei der zweite Übertragungsabschnitt (22) aus einem flexiblen fadenartigen Element (22) besteht, das dazu geeignet ist, die Verschlussvorrichtung zumindest teilweise zu umschließen,

wobei die Steuervorrichtung (3) aus einer RFID-Vorrichtung besteht,

und das Abfragesignal aus einem Hochfrequenzsignal besteht, **dadurch gekennzeichnet, dass** der erste Übertragungsabschnitt (21) aus einem Koaxialkabel besteht, wobei das Koaxialkabel direkt mit der Steuereinheit (1) verbunden ist.

**2.** System nach Anspruch 1, wobei die Steuereinheit (1) über den ersten Übertragungsabschnitt (21) mit der Verbindungsvorrichtung (23) verbunden ist,

wobei die Verbindungsvorrichtung (23) über zwei entsprechende zweite Übertragungsabschnitte (22) mit mindestens zwei RFID-Vorrichtungen (3) verbunden ist.

**3.** System nach einem oder mehreren der vorhergehenden Ansprüche, wobei mehrere Verbindungsvorrichtungen (3) vorgesehen sind.

**4.** System nach einem oder mehreren der vorhergehenden Ansprüche, wobei der zweite Übertragungsabschnitt (22) mindestens eine Drahtleitung aufweist,

wobei die Verbindungsvorrichtung (23) Leiterbahnen (231) aufweist, die mit dem ersten Übertragungsabschnitt (21) verbunden sind, so dass das Abfragesignal drahtlos an den zweiten Übertragungsabschnitt (22) übertragen wird.

**5.** System nach einem oder mehreren der vorhergehenden Ansprüche, wobei das Abfragesignal aus einem Hochfrequenzsignal mit einer Frequenz im Bereich von 860 MHz bis 960 MHz besteht.

**6.** System nach einem oder mehreren der vorhergehenden Ansprüche, wobei der zweite Übertragungsabschnitt (22) ein flexibles fadenförmiges Element aufweist, dessen Länge gleich der Summe aus einem konstanten Wert und einem wellenformabhängigen Wert ist.

**7.** System nach einem oder mehreren der vorhergehenden Ansprüche, wobei die Steuervorrichtung (3) ein angeformtes Außengehäuse aufweist.

**8.** System nach einem oder mehreren der vorhergehenden Ansprüche, wobei die Steuereinheit (1) ortsbezogene und/oder zeitliche Aufzeichnungsmittel umfasst.

**Revendications**

1. Système de fermeture de sécurité pour commander des dispositifs de fermeture d'ouvertures ou de compartiments ou similaires, comprenant une unité de commande (1), une ligne de transmission et au moins un dispositif de commande (3),
   ladite unité de commande (1) étant connectée audit au moins un dispositif de commande (3) par l'intermédiaire de ladite ligne de transmission,
   ladite unité de commande (1) générant un signal d'interrogation pour ledit dispositif de commande (3), lequel signal d'interrogation est transmis à travers ladite ligne de transmission pour évaluer l'intégrité de ladite ligne de transmission,
   ladite ligne de transmission étant composée d'une première section de transmission (21) et d'une seconde section de transmission (22), qui sont connectées par l'intermédiaire d'un dispositif de connexion (23), laquelle seconde section de transmission (22) est composée d'un élément filiforme flexible (22) adapté pour encercler au moins partiellement ledit dispositif de fermeture,
   ledit dispositif de commande (3) étant constitué d'un dispositif RFID,
   et ledit signal d'interrogation consistant en un signal radiofréquence, **caractérisé en ce que**
   ladite première section de transmission (21) est constituée d'un câble coaxial, lequel câble coaxial est directement connecté à ladite unité de commande (1).

2. Système selon la revendication 1, où ladite unité de commande (1) est connectée audit dispositif de connexion (23) par l'intermédiaire d'une première section de transmission (21),
   Ledit dispositif de connexion (23) étant connecté à au moins deux dispositifs RFID (3) par l'intermédiaire de deux secondes sections de transmission correspondantes (22).

3. Système selon une ou plusieurs des revendications précédentes, où une pluralité de dispositifs de connexion (3) sont prévus.

4. Système selon une ou plusieurs des revendications précédentes, où ladite seconde section de transmission (22) a au moins un fil conducteur,
   ledit dispositif de connexion (23) ayant des pistes conductrices (231) connectées à ladite première section de transmission (21), de sorte que le signal d'interrogation est transmis sans fil à ladite seconde section de transmission (22).

5. Système selon une ou plusieurs des revendications précédentes, où ledit signal d'interrogation consiste en un signal radiofréquence ayant une fréquence allant de 860 MHz à 960 MHz.

6. Système selon une ou plusieurs des revendications précédentes, où ladite seconde section de transmission (22) a un élément filiforme flexible dont la longueur est égale à la somme d'une valeur constante et d'une valeur dépendante de la forme d'onde.

7. Système selon une ou plusieurs des revendications précédentes, où ledit dispositif de commande (3) a un boîtier externe formé d'un seul tenant.

8. Système selon une ou plusieurs des revendications précédentes, où ladite unité de commande (1) comprend des moyens d'enregistrement basés sur l'emplacement et/ou le temps.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2743864 A1

- WO 2006101852 A1